(19)

Europäisches Patentamt

European Patent Office

Office européen des brevets

(11) **EP 3 035 063 A1**

(12) **EUROPEAN PATENT APPLICATION**

(43) Date of publication:
22.06.2016 Bulletin 2016/25

(21) Application number: 14307046.4

(22) Date of filing: 16.12.2014

(51) Int Cl.:
*G01R 23/20* (2006.01)　　　*H04B 3/46* (2006.01)
*H04B 17/10* (2015.01)　　　*H04W 24/08* (2009.01)
*H04W 88/08* (2009.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Dartois, Luc**
**91620 Nozay (FR)**

• **Pierrard, Arnaud**
**91620 Nozay (FR)**

(74) Representative: **Mouney, Jérôme**
**Alcatel-Lucent International**
**148/152 route de la Reine**
**92100 Boulogne-Billancourt (FR)**

Remarks:
Amended claims in accordance with Rule 137(2) EPC.

(54) **Testing system for passive inter-modulations, corresponding method and computer-readable medium**

(57) Testing system, method to test an apparatus and computer-readable medium adapted to determine passive inter-modulation of a tested apparatus, the system comprising transmission means adapted to transmit a first signal to a port of the tested apparatus and reception means adapted to receive a second signal from the port of the tested apparatus and, modeling means adapted to model effect of inter-modulations within the first signal and, correlation means adapted to correlate the second signal and the first signal.

Fig. 4a

**Description**

FIELD OF INVENTION

The present subject matter relates to the determination of the passive inter-modulations (PIM) that can be created in an apparatus, for example a transmission subsystem.

BACKGROUND

Passive inter-modulations can be created in an apparatus, for example a transmission subsystem, they are created between power amplifiers and radiating elements and are source of jamming and desensitization on receivers especially in Frequency Division Duplexing (FDD) radio systems.

The sources of these passive inter-modulation can be bad cables, roasted or badly torque connectors, bad filters and antennas and related time varying and aging effects on such elements due to external aggressors. These external aggressors can be for example dust, finger prints, roasting of metals' interfaces and their plating and water ingress. Problem can come from defects at installation and commissioning or alteration over time.

As those elements are passive it is very difficult to detect the exact origin of the inter-modulations caused by these elements. Indeed the effects can be as small as the system receiver sensitivity and sometime the installation is not easily accessible. So detecting and correcting these passive inter-modulations are a difficult task in cellular systems.

The present subject matter proposes a system, method and computer program for detecting passive inter-modulation even when the level of inter-modulation is below the thermal noise. The testing system, method and computer program of the present subject matter also allow a more accurate position of the sources of such passive inter-modulation at commissioning and during operation of the tested apparatus. It also allow the accurate detection of the position with good separation in case of multiple source that can appear in today complex cascading of passive elements contained between the power amplifier (PA) and antenna systems. The power amplifier is an active device and its non linearity inter-modulation detection is not the subject of this divulgation. However due to its active nature, the level of the inter-modulations of the power amplifier is much higher than the level of passive inter-modulations. So the active inter-modulation could corrupt the de detection of passive inter-modulation.

SUMMARY

This summary is provided to introduce concepts related to the determination of passive inter-modulation.

In one implementation, a system is described. This system is adapted to determine passive inter-modulation of a tested apparatus, the system comprises transmission means adapted to transmit a first signal to a port of the tested apparatus and reception means adapted to receive a second signal from the port of the tested apparatus and modeling means adapted to model effect of inter-modulations within the first signal and correlation means adapted to correlate the second signal and the first signal.

In another implementation, a method for determining passive inter-modulation is described. This method, for determining passive inter-modulation of a tested apparatus, comprises a step of transmitting a first signal to a port of the tested apparatus and, a step of receiving a second signal from the port of the tested apparatus and a step of modeling effect of inter-modulations within the first signal a step of correlating the second signal and the modeled first signal.

In another implementation a computer-readable medium is described. The computer-readable medium has embodied thereon a computer program for determining passive inter-modulation of a tested apparatus comprising a step of transmitting a first signal to a port of the tested apparatus and, a step of receiving a second signal from the port of the tested apparatus and, a step of modeling effect of inter-modulations within the first signal a step of correlating the second signal and the modeled first signal.

BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 presents a first embodiment of the system object of the present subject matter.

Figure 2 presents a second embodiment of the system object of the present subject matter.

Figure 3 presents a third embodiment of the system object of the present subject matter.

Figure 4.a and figure 4.b present a fourth and fifth embodiments of the system object of the present subject matter.

Figure 5 presents a first embodiment of the testing method object of the present subject matter.

Figure 6 presents a second embodiment of the testing method object of the present subject matter.

Figure 7 presents a third embodiment of the testing method object of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

In an embodiment of the present subject matter, the passive inter-modulations detection and coarse positioning are realized with very specialized tools. These specialized tools are not generally embedded into running radio systems. Generally these tools include two high power amplifiers with pure sine wave each and very accurate filtering and linear combining. Generally these tools are not portable equipment but bulky lab test bench that include also a very sensitive receiver to measure third or fifth order inter modulation tones created by the passive inter-modulations source under test. To add a coarse passive inter-modulation source positioning, this tool vobulates one of the tones and by phase variations of the detected passive inter-modulation tone, the tool can do coarse calculation of forth and back travel time along the cable. But due to the method employing un-modulated signals it can only give a very coarse estimation of position and only if there is a single and localized source of passive inter-modulation.

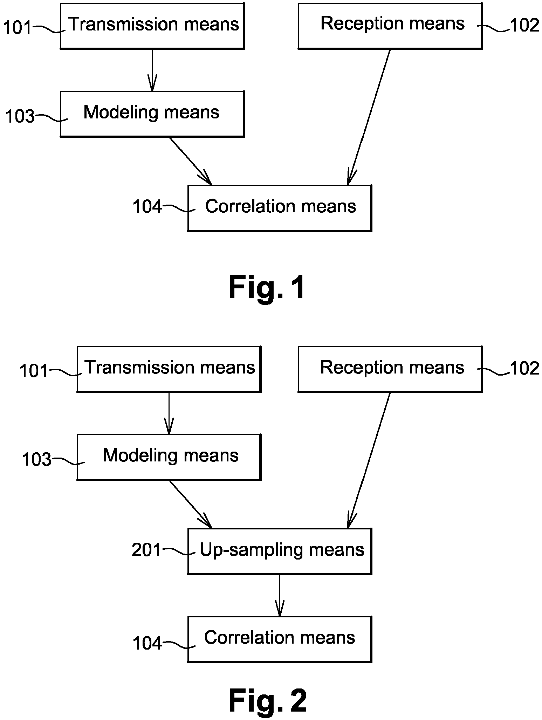

The figure 1 presents the system object of the present subject matter. This system is adapted to determine passive inter-modulation of a tested apparatus. The system comprising:

transmission means 101 adapted to transmit a first signal to a port of the tested apparatus and,
reception means 102 adapted to receive a second signal from the port of the tested apparatus and,
modeling means 103 adapted to model effect of inter-modulations within the first signal and,
correlation means 104 adapted to correlate the second signal and the modeled first signal. The aim of the correlation between the second signal and the modeled first signal is to detect the first signal appearing in this second signal.

The peaks of the correlated signal allow the determination of the localization of the passive inter-modulation by multiplying the delay of the peak by the propagation speed of the signal within the tested apparatus. This multiplication gives twice the distance between the port and the element causing the passive inter-modulation (because there is a propagation forth and a back of the signal).

The figure 2 presents another embodiment of the testing system. In this embodiment the testing system also comprises up sampling means 201 adapted to up-sample the second signal and the modeled first signal. The correlation means are adapted to correlate the up-sampled second signal and the up-sampled modeled first signal. The up-sampling means allow an improve delay accuracy, because they allow to perform correlation at higher rate

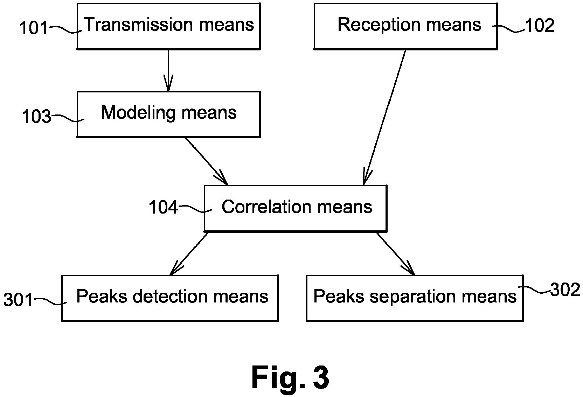

The figure 3 presents another embodiment of the testing system, in this embodiment the system also comprises peaks detection means 301 adapted to detect at least one peak within the correlated signal and/or peaks separation means 302 adapted to separate at least one peak within the correlated signal.

The correlation peaks can have different shapes, level and width. Peaks with a minimum width correspond to impulse response of cascaded transmission and reception filters and correspond to a punctual echo source. The Passive chain is constituted of a succession of different equipments for example feeders, jumpers, connectors, low noise amplifier, duplexers/diplexers and antenna systems. In a feeder line when losses in uplink (receive) path is high it may happen that operator inserts close to antenna a tower mounted amplifier (TMA) containing passive transmission and reception filters and active reception signal amplifier. This tower mounted amplifier box can generate both passive inter modulation from its transmission filter part and reception inter-modulations form its reception low noise amplifier. But thanks to reception active inter-modulation model it will not bias the wanted passive inter-modulation detection. These different equipments can cause passive inter-modulation and can be of different nature and linked to the geometry of the peaks of correlation. For example, a connector will cause very localized passive inter-modulation source, but bulky filters or bad antennas can cause distributed passive inter-modulation linked to the geometry and technology of these filters or antennas. By bulky filters we mean filters with large physical dimensions that help reduce their corresponding radio frequency losses, but then their large geometry may be source of less localized passive inter-modulation sources within their structure. So the correlation peaks associated to the passive inter-modulation of these elements can have varying width corresponding to electric lengths of equipments, 10cm up to 2m typically. Detecting and identifying the non separable width of passive inter-modulation or VSWR echoes can help experts to correlate with known equipment installed at that distance from the radio equipment for example the remote radio head RRH and can help for example antenna designers and manufacturers to identify issues in an antenna or even part of it.

In an embodiment the separations means can separate passive inter-modulation source according to the local echo width and using the high frequency sampling rate of captures signals and correlation output. The frequency of correlation is the frequency of sampling of the two signals correlated by the correlation means. This local echo width is compare to the inverse of the frequency of correlation. The passive inter-modulations are located on a single place if the localized echo width (time unit) is equal to the largest between 1/*Corr_Fred* where *Corr_Freq* is the frequency of correlation and 1/*Filter_BW* where *Filter_BW* is the bandwidth of the radio equipment duplex filter. Passive inter-modulation sources are diffused if echo width is superior to 2/*Corr_Fred* or 2/*Filter_BW.*

In an exemplary embodiment the first signal is transmitted within a bandwidth of 75 MHz, models are computed with an up-sampling of four so in a final bandwidth of 75*4=300 MHz, and the correlation is performed with an up-sampling of 16 so in a bandwidth of 4.8 GHz. So in this embodiment the frequency of correlation is equal to 4.8GHz. In this example the correlator minimum pulse width will be dictated by the 1/*Filter_BW* which is greatly upper than 1/4.8 GHz. Here the oversampling is used for accuracy of peak position detection and *Filter_BW* is the main discriminator for classification between localize and non localize passive inter-modulation sources.

In another embodiment the transmission means and reception means are also respectively adapted to store the first and second signal.

In another embodiment the modeling means 201 are configured to model the effect of the inter-modulation as being third order or fifth order inter-modulation.

Using the system of the present subject matter the inter-modulations caused by the power amplifier can be mitigate from the passive inter-modulations, indeed the inter-modulations caused by the power amplifier correspond to a peak at or very close to zero delay and passive inter-modulations correspond to at least one peak farther to zero. Therefore the first can be isolated and removed and do not disturb the detection of true passive inter-modulations as long as receiver dynamic and linearity as well as correlator digital circuits are is not creating blocking of passive inter-modulations by the power amplifier non linearity contributions.

The book "Wideband Amplifier Applications Book" of Chadwick published in 1986 presents several ways to model the effect of the inter-modulations within a signal. One of these models is classical and a complete analysis for input signal which can be represented by discrete frequencies like all analogue signals in the time domain. For example the inter-modulation created by an amplifier can be characterized by a Taylor series of the generalized transfer function:

$$i_0 + k_1 e_{IN} + k_2 e_{IN}^2 + k_3 e_{IN}^3 + k_4 e_{IN}^4 + k_5 e_{IN}^5 + ...$$

Wherein:

$$e_{IN} = a_1 \cos \omega_1 t + a_2 \cos \omega_2 t$$

$k_i$ are the coefficients of each polynomial term of the complex gain curve of the power amplifier. Usually the higher order terms are lower than the first terms. For example $k_2$ is the quadratic coefficent and its level influences the level of third order terms. Usually the higher terms are the even orders corresponding to the odd inter-modulation products.

$a_i$ are the amplitudes of each sine wave that contribute to $e_{IN}$ the input signal in this simple 2 tones cases which is the simplest one to illustrate the appearing of intermodulation tones depending on the $k_i$ level, $a_i$ level and algebraic sum of their respective tone frequency.

In the real application as well as the passive inter-modulation method and system object of the present subject matter, a wideband signal is the integral of all its frequency components with quasi even power weighting ($e_{IN}$ becomes an integral and the linearized power amplifier output frequency components and the passive inter-modulations outputs become also integrals of all frequency components and their numerous inter-modulation tones) are used and the output $i_{OUT}$ may be shown to be the sum of the DC components, DC (as opposed to AC) is the continuous term or the zero

frequency term:

$$i_{OUT} = i_0 + \frac{k_2}{2}(a_1^2 + a_2^2) + \frac{k_4}{8}(3a_1^4 + 12a_1^2 + 3a_2^4)$$

$$+ \left(\frac{1}{4}k_3 a_1^3 + \frac{5}{16}k_5 a_1^5 + \frac{5}{4}k_5 a_1^3 a_2^2\right)cos(3\omega_1 t)$$

$$+ \left(\frac{1}{4}k_3 a_2^3 + \frac{5}{16}k_5 a_2^5 + \frac{5}{4}k_5 a_1^2 a_2^3\right)cos(3\omega_2 t)$$

$$+ \left(\frac{3}{4}k_3 a_1^2 a_2 + \frac{5}{4}k_5 a_1^4 a_2 + \frac{15}{8}k_5 a_1^2 a_2^3\right)cos((\omega_1 \pm 2\omega_2)t)$$

$$+ \left(\frac{3}{4}k_3 a_2^2 a_1 + \frac{5}{4}k_5 a_2^4 a_1 + \frac{15}{8}k_5 a_2^2 a_1^3\right)cos((\omega_2 \pm 2\omega_1)t)$$

The above formula is the application of the polynomial model of the passive inter-modulation (with the $k_i$ terms) to the input signal (for example a sum of two tones taken here for simplification) and developed and then terms are regrouped by discrete frequencies to retrieve their respective weighting by use of trigonometric formulas where product of $cos(\omega_1)^{N1} * cos(\omega_2)^{N2}$ is a sum of $cos(\alpha * \omega_1 \pm \beta\omega_2)$ with $-N_1 < \alpha < N_1$ and $-N_2 < \beta < N_2$. The part of the equation $\left(\frac{3}{4}k_3 a_1^2 a_2 + \frac{5}{4}k_5 a_1^4 a_2 + \frac{15}{8}k_5 a_1^2 a_2^3\right)cos((\omega_1 \pm 2\omega_2)t)$ describes the dual term corresponding to third order tones. By knowledge of transmission to reception duplex spacing we select the right component between $\omega_2 \pm 2\omega_1$ which is then the passive inter-modulation third order model for the correlation reference signal. As opposed to radars, here the echo to detect is not the first signal but inter-modulation products falling apart in frequency and having complex and a priori unknown formulation, the so-called second signal. But due to non linear modeling theory there is a link between passive inter-modulation frequency position and inter-modulation order as each frequency bin inter-modulates with all others. A simple example of third order inter-modulation that can fall in receiving band at the FDD duplex spacing is given here below. Duplex spacing is the algebraic frequency distance from center of a transmission carrier to center of the reception carrier in an FDD system. In cellular applications its often correspond to a negative (not always) number of several dozens to several hundreds of MHz in cellular applications are of the form:

$$PIM = A * conjugate(S_1(f_1)) * S_2(f_2)^2$$

So there is still high correlation between source wideband signal $S_1$ and $S_2$ and the passive inter-modulation signal to detect.

In an embodiment the first signal is constituted of a Gold sequence, because this sequence has good cross correlation properties. This sequence is modulated using Minimum-Shift Keying (MSK) modulation, this MSK modulation associates a circular constellation shift of $\frac{\pi}{2}$ when emitting a '1' and a shift of $-\frac{\pi}{2}$ when emitting a '0'. This modulation has a good Power to Average Ratio which eases power amplifier for transmitting a maximum of power in order to maximize the detection of lower passive inter-modulations sources. After that the signal is filtered using a root raised cosine filter (Alpha = 0.22) like in WCDMA to limit the wide band noise emission outside the transmit band and especially the emission with the receive band. This first signal is spread for example along a 75 MHz bandwidth in order to fill the whole transmission band. This is the transmission bandwidth used within the cellular CDS 1800 system.

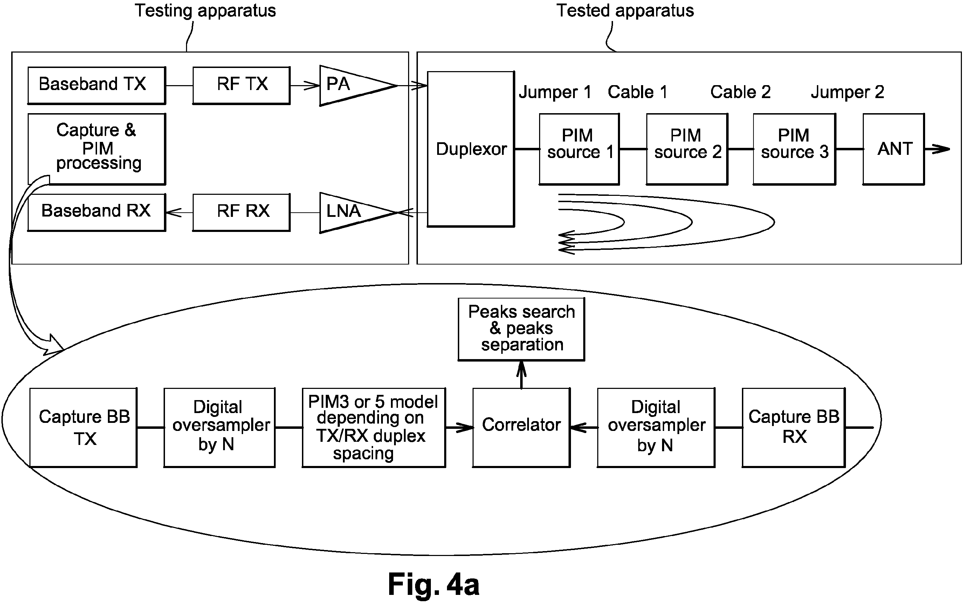

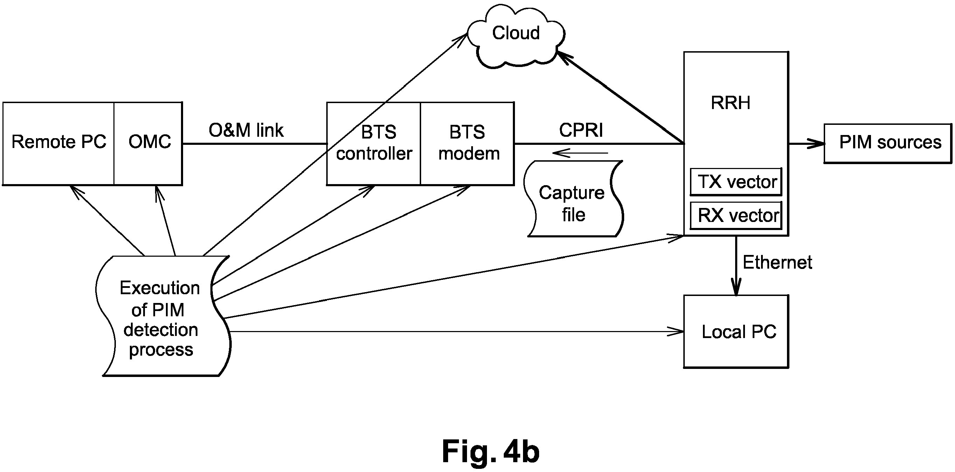

The figure 4.a presents another embodiment of the present subject matter. In this embodiment the system comprises
transmission means 101 adapted to transmit a first signal to a port of the tested apparatus and,
reception means 102 adapted to receive a second signal from the port of the tested apparatus and,
modeling means 103 adapted to model effect of inter-modulations within the first signal and,
correlation means 104 adapted to correlate the second signal and the modeled first signal and,
peaks detection means 301 adapted to detect at least one peak within the correlated signal and
peaks separation means 302 adapted to separate at least one peak within the correlated signal.

In this system the transmission means are constituted of a baseband transmission part a radio frequency part dedicated to the transmission and a power amplifier. The receptions means are constituted of a low noise amplifier a radio frequency part dedicated to the reception and frequency translation of the received signal and a baseband reception part.

In some embodiments the system can also comprises two digital over-samplers dedicated respectively to the reception and transmission part. The transmitted signal as well as the reception signals have limited sampling rate like 200 or 300MHz range determined by the Nyquist sampling for the given transmission or reception band to minimize the cost of those hardware components. Due to the wanted high timing resolution in the correlation to get very accurate peaks position that directly give the passive inter-modulation source position along the passive transmit hardware chain and cables, we need corresponding oversampling done purely in digital domain to get accurate peak position. Digital over-samplers work on digital stored captures of transmission and reception signals.

An another words the testing system uses native building blocks of cellular radio equipment for example remote radio head (RRH) hardware to drastically simplify the tool and uses its modulation and broadband and high sampling rate capability to enable proportionally very accurate multi source passive inter-modulations detection using precise correlators. So radio equipments can be used as low cost factory tool and can also be used as products with this feature to help radio site passive inter-modulations commissioning and passive inter-modulations survey during operation.

In another example of the use of the testing system, two WCDMA or LTE carriers of 5MHz of bandwidth and 20W power each, generate passive inter-modulation due to bad antenna or bad connector 10dB below thermal noise. In such system the noise figure is required to be down to 2dB, meaning that 10dB below noise for passive inter-modulations would already create a global about 1dB desensitization and this just with passive inter-modulation at -159dB below each transmitted carrier. The testing system is using the capabilities of today radio equipments in many bands to generate modulated first signal over several 10s of MHz (typically 60MHz or more in 2GHz band). With analogy to radar detection the wider is the spectrum of the first signal the more time accurate is the detection of the echo. This is particularly valid when detection is made with long correlators, these long correlators help detecting correlation peaks even when Signal To Noise Ratio (expressed in dBm) of received signal is low or negative. In comparison legacy passive inter-modulation detection systems are usually limited to detect passive inter-modulation at -150dB below the transmitter carrier power.

Same formulation can be derived for wider duplex spacing with fifth order passive inter-modulation. Regarding wideband transmission signal passive inter-modulation model is just the sum of above elementary terms over the transmission and reception bands (all terms that spectrally fall in reception filter band). And as correlation is a linear function one can detect for free a set of echoes as correlation peaks will be at the image of the delayed sum of passive inter-modulation sources acting each as independent echo, each correlated with the source but delayed. And at the end the passive inter-modulation level and position accuracy is determined by transmission and reception sampling rate and occupied transmission source bandwidth. To limit the correlation pulse width to the bare minimum the idea is to use only the native transmission and reception filters of the radio equipment and excite the power amplifier and the chain with widest wideband PN signal possible (PN stands for Pseudo Noise: a digital signal having statistical properties like a wideband flat noise).

The potential residue of power amplifier non linearity will create a 1st close in echo as a kind of quasi zero delay PIM but without blinding the wanted PIM delayed ones, provided a good dynamic of the receiver analog chain and captured digital samples and of the accumulator of the correlator. Typically 60dB legacy receivers' dynamic is enough and 48 bits accumulators that one can find in baseband components of RRH like FPGA.

Correlation is simply a sliding correlation between the passive inter-modulation above simple model and raw received signal, both at same sampling & coherent rate. Then the sliding horizon is provisioned according to twice the maximum signal round trip between power amplifier and last element which is the antenna (physical length of each passive section times its specific light velocity). So this correlation window is defined by the topology, geometry and relative light velocity of the antenna and cabling system placed after the power amplifier. This correlation window is typically 375ns for a 50m feeder line and antenna with a speed of the transmission of the signal within the feeder of 0.8 times the light speed. It correspond to 113 adjacent points of correlation with signals sampled natively at 300MHz and of course proportionally more for each digital oversampled application that get proportionally higher time and position passive inter-modulation position accuracy.

The system object of the present subject matter includes a digital oversampling of received signal. It brings accordingly higher time and passive inter-modulation position accuracy without jeopardy on receiver ADC sampling rate. This is the sampling rate of Analog to Digital Converter of the receiver. Its sampling and conversion rate is chosen close to the Nyquist frequency of the receiver filter, here same bandwidth as the transmit signal) which remains as in current modern radio heads in the range of 300MSPS. (MSPS stands for Mega Samples Per Second. Here 300MSPS means that the analogue to digital converter is clocked at 300MHz and captures 300 millions of complex samples per second, just as the transmitter digital storage. It is important that both, transmit and receive signal, are the same and are preferably synchronous and remain so after their respective digital oversampling). To improve time resolution in the correlator, one uses all available transmission and reception band of the radio head, typically 60 to 75MHz in usual 2GHz cellular applications. This full band use is done via pseudo random binary signal generator that is filtered by a filter similar in bandwidth to the radio equipment transmission filter and amplified.

The system object of the present subject matter allows, for the sole cost of a legacy radio head, very accurate factory detection and positioning of elements creating passive inter-modulation. This system is useful for antenna manufacturers and integrator of elements located between the power amplifier and the antenna. The system also allows the passive inter-modulation detection at commissioning and seamlessly during operation of any radio equipment. Even more with simple extension of correlation time window, one can detect passive inter-modulation caused by antenna site installation impairments like bad metal structures close to antenna that experience has proved to be present or appear during life of a cellular site. It just need to add correlation points to cover the additional forth and back on the air propagation time to the on the air non linear obstacle.

Thanks to broadband transmit and receive embedded in the radio compared to discrete tones former approach, the testing system of the present subject matter can detect passive inter-modulation position typically with few cm accuracy (2 to 5) in position for typical cables light velocity of 0.8 and those passive inter-modulation level could be detected down to 10dB below receiver noise with just few million digital oversampled samples of transmitted and received signal, this means one can detect very early degradation of the site within the first dB of system noise factor degradation.

Cost at manufacturing is divided by two orders of magnitude for tools and enable systematic measures for antenna and RF line ups improving quality and passive inter-modulation reproducibility of their onsite passive inter-modulation contribution. The inter-modulation performance test is specified in the standard IEC 62047. This test consists in the transmission of two tones test at 20W (43 dBm) each, and the third inter-modulation product shall be below 150 dB (-150 dBc) that means below -107 dBm

The implementation in legacy radio equipment only uses a few percentage of the FPGA hardware resources used for nominal operation.

Also the exact same hardware and principle could be advantageously applied to solve another monitoring issue in radio heads: the VSWR detection, especially for lower levels of echoes and easily discriminate internal VSWR in the machine from VSWR created in the feeder & antenna lineup. Typically low VSWR below -20dB could be discriminated from higher ones with same positioning accuracy as PIM sources. VSWR stands for Voltage Standing Wave Ratio. This expresses as the ratio usually in dB between forward (transmitted) signal power and corresponding reflected fraction of the signal power. It measures the de adaptation of the passive transmit chain after the power amplifier. When at the VSWR is equal to zero this ratio is perfect and the higher the VSWR is, the worse it is. The sources of reflections/de adaptations can be as passive inter-modulation sources or caused by bad antennas. As the VSWR model is simply a linear echo of the transmitted signal (attenuation & delay), it can be estimated in. level and position with same means as for passive inter-modulation with a reference model which is simply identity, meaning with correlator simply comparing transmit signal and delayed copies of received signal.

The system of the present subject matter can be implemented in several elements or apparatus. Generally the transmission means responsible of the first signal generation and transmission and the reception means responsible of the reception of the second signal are localized within the same apparatus for example the radio equipment used as test equipment or as part of base station field product. If the transmission and/or reception means are adapted to store the respectively first and/or second signal these stores means are located within the same apparatus as the reception and transmission means. The other means of the system (modeling means, oversampling means, correlation means, peak detection means and peak separation means) can be done either in hardware or firmware/software in quasi real time or in batch.

In an embodiment these other means are located within the same radio equipment as the reception and transmission means.

In another embodiment these other means are located within a locally or remotely connected terminal or computer.

In another embodiment these other means are located within the base station modem or controller hardware/firmware/software.

In another embodiment these other means are located within higher level nodes of the cellular network and for example operation and maintenance center (OMC).

These entire, previously described, embodiments are summarized in the figure 4.b.

In the embodiments, where all the means are not localized in the same apparatus, the communication between the apparatus can be based on a round robin periodic request either on request of master nodes or when they receive ad-hoc information files from the radio equipment. These ad-hoc information files contain the first and second signals before oversampling. In other embodiment the ad-hoc information files contain at least both non oversampled digital complex vectors of respectively transmission and reception signals (first and second signals) tagged with their common sampling rate value and the explicit or implicit radio head address so that the apparatus can retrieve and use the topology and characteristics of the passive chain tested behind the radio equipment, to help correlation between this installed topology and the detected passive inter-modulation sources positions.

Depending on the architecture and generation of cellular system or test system it can use different media and interfaces 'standards for those files transfer for example Ethernet when communicating with a local or remote computer, or Common Public Radio Interface (CPRI) between base station controller and modem and radio equipment. The advantage of doing oversampling in remote place is that local radio equipment storage and file transfer has minimal size as well as transmit time between both local and remote entities.

An embodiment of the present subject matter the testing system comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

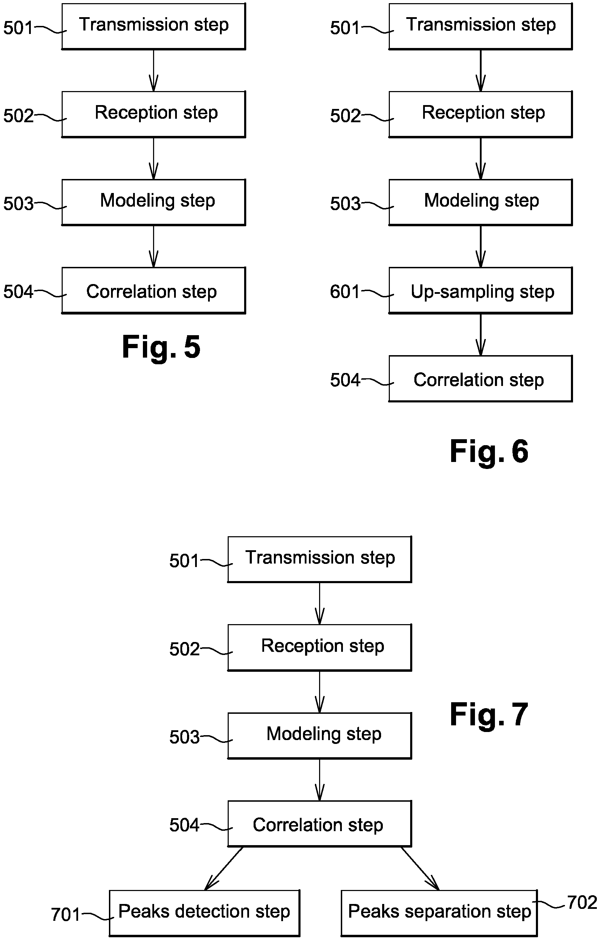

The figure 5 presents a testing method, object of the present subject matter, for determining passive inter-modulation of a tested apparatus comprising

a step 501 of transmitting a first signal to a port of the tested apparatus and,

a step 502 of receiving a second signal from the port of the tested apparatus and,

a step 503 of modeling effect of inter-modulations within the first signal and,

a step 504 of correlating the second signal and the modeled first signal.

The figure 6 presents another embodiment of the testing method. In this embodiment the testing method also comprises a step 601 of up-sampling the first signal and second signal. The correlating step 504 is also configured to correlate the up-sampled second signal and the up-sampled modeled first signal.

The figure 7 presents another embodiment of the testing method. In this embodiment the testing method also comprises;

a step 701 of detecting at least one peak within the correlated signal and

a step 702 of separating at least one peak within the correlated signal.

In an embodiment of the testing method the step 103 of modeling the effect of inter-modulations is configured to model the effect of the inter-modulation as being third order or fifth order inter-modulation.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method, described figure 5, for determining passive inter-modulation of a tested apparatus, is embodied within a computer readable medium. This method comprises the following steps;

a step 501 of transmitting a first signal to a port of the tested apparatus and,

a step 502 of receiving a second signal from the port of the tested apparatus and,

a step 503 of modeling effect of inter-modulations within the first signal and

a step 504 of correlating the second signal and the modeled first signal.

Another embodiment of the subject matter is a computer program, configured to realize the method, described figure 6, for determining passive inter-modulation of a tested apparatus, is embodied within a computer readable medium. This method comprises the step of the figure 5 and also a step 601 of up-sampling the first signal and second signal. The correlating step 504 is also configured to correlate the up-sampled second signal and the up-sampled modeled first signal.

Another embodiment of the subject matter is a computer program, configured to realize the method, described figure 7, for determining passive inter-modulation of a tested apparatus, is embodied within a computer readable medium. This method comprises the step of the figure 5 and also the following steps;
a step 701 of detecting at least one peak within the correlated signal and
a step 702 of separating at least one peak within the correlated signal.

Another embodiment of the subject matter is a computer program, configured to realize the method, described figure 5, for determining passive inter-modulation of a tested apparatus, is embodied within a computer readable medium. In this embodiment the step 503 of modeling the effect of inter-modulations is configured to model the effect of the inter-modulation as being third order or fifth order inter-modulation.

**Claims**

1.  System adapted to determine passive inter-modulation of a tested apparatus, the system comprising;
transmission means (101) adapted to transmit a first signal to a port of the tested apparatus and,
reception means (102) adapted to receive a second signal from the port of the tested apparatus and,
modeling means (103) adapted to model effect of inter-modulations within the first signal and,
correlation means (104) adapted to correlate the second signal and the first signal.

2.  System according to claim 1 also comprising;
peaks detection means (301) adapted to detect at least one peak within the correlated signal and/or
peaks separation means (302) adapted to separate at least one peak within the correlated signal.

3.  System according to claim 2 wherein the separations means (302) are configured to separate at least one peak, by determining a width of the peak and by comparing this width with a threshold being the maximum between;
two times the inverse of a frequency of sampling of the second and first signals and
two times the inverse of a bandwidth of the transmission means (101).

4.  System according to claim 3 wherein the separations means (302) are configured to determine that a peak is long if the a width of the peak is superior to the threshold and that a peak is short if the width of the peak is inferior to the threshold.

5.  System according to any of the previous claims wherein;
the transmission means (101) are also adapted to store the first signal and/or,
the reception means (102) are also adapted to store the second.

6.  System according to any of the previous claims also comprising up-sampling means (201) adapted to up-sample the second signal and the modeled first signal, and wherein the correlation means (104) are also adapted to correlate the up-sampled second signal and the up-sampled modeled first signal.

7.  System according to any of the previous claims wherein the modeling means (102) are configured to model the effect of the inter-modulation as being third order or fifth order inter-modulation.

8.  System according to any of the previous claims wherein the transmission means and the reception means are localized within a radio equipment of a base station.

9.  System according to the claim 6 wherein the transmission means and/or the reception means and/or the up-sampling means and/or the modeling means and/or the correlation means and/or the peaks detection means and/or the peaks separations means;
are located within the radio equipment or
are located within a locally or remotely connected terminal or computer or
are located within the base station modem or controller hardware/firmware/software or
are located within one of the other network equipments of a cellular network in which belong the base station.

10. A method for determining passive inter-modulation of a tested apparatus comprising
a step (501) of transmitting a first signal to a port of the tested apparatus and,
a step (502) of receiving a second signal from the port of the tested apparatus and,
a step (503) of modeling effect of inter-modulations within the first signal

a step (504) of correlating the second signal and the modeled first signal.

11. The method according to claim 10 also comprising;
    a step (701) of detecting at least one peak within the correlated signal and
    a step (702) of separating at least one peak within the correlated signal.

12. The method according to claim 10 or 11 also comprising
    a step (601) of up-sampling the first signal,
    and wherein the correlating step (504) is also configured to correlate the up-sampled second signal and the up-sampled modeled first signal.

13. The method according to claim 10 or 11 or 12 wherein the step (503) of modeling the effect of inter-modulations is configured to model the effect of the inter-modulation as being third order or fifth order inter-modulation.

14. A computer-readable medium having embodied thereon a computer program for determining passive inter-modulation of a tested apparatus comprising
    a step (501) of transmitting a first signal to a port of the tested apparatus and,
    a step (502) of receiving a second signal from the port of the tested apparatus and,
    a step (503) of modeling effect of inter-modulations within the first signal
    a step (504) of correlating the second signal and the modeled first signal.


**Amended claims in accordance with Rule 137(2) EPC.**

1. System adapted to determine passive inter-modulation of a tested apparatus, the system comprising;
   transmission means (101) adapted to transmit a first signal to a port of the tested apparatus and,
   reception means (102) adapted to receive a second signal from the port of the tested apparatus and,
   modeling means (103) adapted to model effect of inter-modulations within the first signal and,
   correlation means (104) adapted to correlate the second signal and the modeled first signal;
   the system being **characterized in that** it also comprises up-sampling means (201) adapted to up-sample the second signal and the modeled first signal, and wherein the correlation means (104) are also adapted to correlate the up-sampled second signal and the up-sampled modeled first signal.

2. System according to claim 1 also comprising;
   peaks detection means (301) adapted to detect at least one peak within the correlated signal and
   peaks separation means (302) adapted to separate at least one peak within the correlated signal.

3. System according to claim 2 wherein the separations means (302) are configured to separate at least one peak, by determining a width of the peak and by comparing this width with a threshold being the maximum between;
   two times the inverse of a frequency of sampling of the second and first signals
   and
   two times the inverse of a bandwidth of the transmission means (101).

4. System according to claim 3 wherein the separations means (302) are configured to determine that a peak is long if the a width of the peak is superior to the threshold and that a peak is short if the width of the peak is inferior to the threshold.

5. System according to any of the previous claims wherein;
   the transmission means (101) are also adapted to store the first signal and/or,
   the reception means (102) are also adapted to store the second.

6. System according to any of the previous claims wherein the modeling means (102) are configured to model the effect of the inter-modulation as being third order or fifth order inter-modulation.

7. System according to any of the previous claims wherein the transmission means and the reception means are localized within a radio equipment of a base station.

8. System according to the claim 5 and the claim 2 wherein the transmission means and/or the reception means and/or the up-sampling means and/or the modeling means and/or the correlation means and/or the peaks detection means and/or the peaks separations means;
are located within the radio equipment or
are located within a locally or remotely connected terminal or computer or
are located within the base station modem or controller hardware/firmware/software or
are located within one of the other network equipments of a cellular network in which belong the base station.

9. A method for determining passive inter-modulation of a tested apparatus comprising
a step (501) of transmitting a first signal to a port of the tested apparatus and,
a step (502) of receiving a second signal from the port of the tested apparatus and,
a step (503) of modeling effect of inter-modulations within the first signal
a step (504) of correlating the second signal and the modeled first signal.
the method being **characterized in that** it is also comprising:

a step (601) of up-sampling the first signal,
and wherein the correlating step (504) is also configured to correlate the up-sampled second signal and the up-sampled modeled first signal.

10. The method according to claim 9 also comprising;
a step (701) of detecting at least one peak within the correlated signal and
a step (702) of separating at least one peak within the correlated signal.

11. The method according to claim 8 or 9 or 10 wherein the step (503) of modeling the effect of inter-modulations is configured to model the effect of the inter-modulation as being third order or fifth order inter-modulation.

12. A computer-readable medium having embodied thereon a computer program for determining passive inter-modulation of a tested apparatus comprising
a step (501) of transmitting a first signal to a port of the tested apparatus and,
a step (502) of receiving a second signal from the port of the tested apparatus and,
a step (503) of modeling effect of inter-modulations within the first signal
a step (504) of correlating the second signal and the modeled first signal,
the computer program being **characterized in that** it is also comprising:

a step (601) of up-sampling the first signal,
and wherein the correlating step (504) is also configured to correlate the up-sampled second signal and the up-sampled modeled first signal.

**Fig. 1**

**Fig. 2**

**Fig. 3**

Fig. 4a

**Fig. 4b**

EP 3 035 063 A1

501 — Transmission step

502 — Reception step

503 — Modeling step

504 — Correlation step

**Fig. 5**

501 — Transmission step

502 — Reception step

503 — Modeling step

601 — Up-sampling step

504 — Correlation step

**Fig. 6**

501 — Transmission step

502 — Reception step

503 — Modeling step

**Fig. 7**

504 — Correlation step

701 — Peaks detection step

Peaks separation step — 702

Europäisches
Patentamt

European
Patent Office

Office européen
des brevets

**EUROPEAN SEARCH REPORT**

Application Number

EP 14 30 7046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/085345 A1 (WAVE HOLDINGS LLC P [US]) 5 June 2014 (2014-06-05) * paragraphs [0004], [0011], [0015], [0020] - [0023]; figure 6 * ----- | 1-14 | INV. G01R23/20 H04B3/46 H04B17/10 |
| X | US 2002/094785 A1 (DEATS BRADLEY W [US]) 18 July 2002 (2002-07-18) * paragraphs [0013] - [0021], [0025], [0103], [0138] - [0148], [0154], [0174], [0175]; figures 9-11 * ----- | 1,2,5-14 | ADD. H04W24/08 H04W88/08 |
| X | GB 2 502 281 A (ACEAXIS LTD [GB]) 27 November 2013 (2013-11-27) * page 13, line 7 - line 27 * * page 15, line 29 - page 17, line 23 * * page 20, line 6 - line 21 * * figures 4-8 * ----- | 1,2,5-14 | |

TECHNICAL FIELDS
SEARCHED      (IPC)

G01R
H04B
H04W

The present search report has been drawn up for all claims

| Place of search | Date of completion of the search | Examiner |
|---|---|---|
| Munich | 15 June 2015 | Reeck, Guido |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 7046

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2015

| Patent document cited in search report | | Publication date | Patent family member(s) | | Publication date |
|---|---|---|---|---|---|
| WO 2014085345 | A1 | 05-06-2014 | NONE | | |
| US 2002094785 | A1 | 18-07-2002 | NONE | | |
| GB 2502281 | A | 27-11-2013 | CN | 104488212 A | 01-04-2015 |
| | | | EP | 2853048 A2 | 01-04-2015 |
| | | | GB | 2502281 A | 27-11-2013 |
| | | | GB | 2517847 A | 04-03-2015 |
| | | | WO | 2013175194 A2 | 28-11-2013 |

EPO FORM P0459

For more details about this annex : see Official Journal of the European Patent Office, No. 12/82